# FASCICULE DE BREVET EUROPEEN

(11) **EP 4 595 141 B1**
(45) Date de publication et mention de la délivrance du brevet: **11.03.2026**
(21) Numéro de dépôt: 24837197.3
(22) Date de dépôt: 20.12.2024
(51) Int. Cl.: H01M 10/04, H01M 10/0585

(54) **PROCÉDÉ ET UNITÉ DE FABRICATION D'UNE CELLULE POUR BATTERIE ÉLECTRIQUE**
HERSTELLUNGSVERFAHREN UND -EINHEIT FÜR EINE ZELLE EINER ELEKTRISCHEN BATTERIE
MANUFACTURING METHOD AND UNIT FOR A CELL OF AN ELECTRIC BATTERY

(30) Priorité: 22.12.2023 FR 2315241
(43) Date de publication de la demande: 06.08.2025
(73) Titulaire: Verkor, 38000 Grenoble (FR)
(72) Inventeur: BAE, Yunju, 38000 Grenoble (FR); SHIN, Hyuk, 38000 Grenoble (FR); KIM, Youngsu, 38000 Grenoble (FR); KIM, Jeong Hyun, 38000 Grenoble (FR); JEONG, Hyeok, 38000 Grenoble (FR)
(74) Mandataire: Novagraaf Group
(86) Numéro de dépôt international: PCT/IB2024/063054
(87) Numéro de publication internationale: WO 2025/134064

(56) Documents cités:
- WO-A1-2020/050537
- WO-A1-2023/075328

## Description

### Domaine technique de l'invention

L'invention concerne le domaine des batteries électriques rechargeables pour véhicule automobile électrique. En particulier l'invention concerne la fabrication de cellules électriques destinées à équiper des batteries électriques. De façon plus précise, l'invention concerne un procédé et une unité de fabrication de cellules électrochimiques lithium-ion du type « pouch », c'est-à-dire des cellules en sachet. L'invention peut aussi concerner un procédé et une unité de fabrication de cellules électrochimiques lithium-ion du type prismatique.

### Arrière-plan technique

WO 2023/075328 Al divulgue un procédé de fabrication d'une cellule pour batterie secondaire selon le préambule de la revendication 1.

Les cellules électriques, dites du type « pouch » par exemple, c'est-à-dire des cellules en sachets, destinées à équiper des batteries électriques rechargeables peuvent être fabriquées de différentes façons.

Une manière de fabriquer ces cellules consiste à découper puis à déposer des électrodes de polarité opposée les unes sur les autres en les séparant par un film séparateur isolant.

Le film séparateur est déroulé au fur et à mesure que les électrodes sont déposées sur ledit film séparateur. Ainsi le film séparateur est d'abord déroulé. Une première électrode est déposée. Le film séparateur est à nouveau déroulé pour recouvrir la première électrode. Une deuxième électrode de polarité opposée à la première électrode est déposée sur le film séparateur. Le film séparateur est alors déroulé à nouveau pour recouvrir la deuxième électrode. Ces opérations sont réitérées plusieurs fois en fonction des besoins en termes de capacité et de puissance.

Les cadences de production sont élevées dans les usines de production de cellules électriques, conformément au modèle économique communément admis, et ceci pour réaliser des économies d'échelles d'une part et répondre aux besoins grandissants de l'industrie automobile d'autre part. Les opérations d'empilage des électrodes les unes sur les autres pour former une pile d'électrodes, sont donc un poste névralgique où précision et vitesse œuvrent en synergie pour garantir productivité des usines, fiabilité des cellules et sécurité des utilisateurs finaux. Au cours des opérations d'empilage dans une unité de fabrication, les outils se déplacent à grandes vitesses. Ainsi, typiquement une unité de fabrication réalise un empilage d'électrodes, comprenant plus d'une cinquantaine d'électrodes, est formé en moins d'une minute. Dans un souci constant d'augmenter les cadences de production, les divers mouvements réalisés par les outils sont appelés à être optimisés.

L'invention vise par conséquent à améliorer les procédés et unités fabrication de cellules électriques existantes pour en augmenter la productivité.

### Résumé de l'invention

A cet effet, il est proposé en premier lieu un procédé de fabrication d'une cellule pour batterie secondaire comprenant :
- une première opération de déplacement d'une table d'empilage, ledit déplacement étant effectué selon une première direction de déplacement,
- une deuxième opération de déroulement d'un film séparateur sur la table d'empilage, ledit film séparateur comprenant une première électrode préalablement positionnée sur celui-ci,
- une troisième opération de déplacement de la table d'empilage selon une deuxième direction de déplacement opposée à la première direction de déplacement,
- une quatrième opération de dépose d'une deuxième électrode sur le film séparateur, ladite deuxième électrode étant de polarité opposée à la première électrode,
- une cinquième opération de déplacement de la table d'empilage, selon la première direction de déplacement,
- une sixième opération de déroulement du film séparateur de sorte à recouvrir la deuxième électrode, ledit film séparateur comprenant en outre une première électrode préassemblée sur celui-ci et déposée sur le film séparateur au-dessus de la deuxième électrode,
- une septième opération de déplacement de la table d'empilage selon la deuxième direction,
procédé dans lequel, les quatrième, cinquième, sixième, septième opérations sont répétées jusqu'à former un empilage d'électrodes dans lequel les électrodes de polarité opposées sont séparées par le film séparateur.

Ce procédé permet d'atteindre des cadences industrielles en réduisant le nombre d'opérations. Les mouvements des différents outils sont ainsi optimisés.

Diverses caractéristiques supplémentaires peuvent être prévues seules ou en combinaison :
- la première direction de déplacement est orientée verticalement vers le bas, et la deuxième direction de déplacement est orientée verticalement vers le haut, procédé dans lequel la table d'empilage se déplace uniquement selon une trajectoire sensiblement rectiligne pendant l'empilage des électrodes ;
- les électrodes sont disposées les unes sur les autres pour former un empilage d'électrodes, les électrodes étant séparées les unes des autres par du film séparateur ;
- la deuxième opération et la sixième opération sont respectivement initiées à l'issue de la première opération et de la cinquième opération ;
- la quatrième opération est initiée à l'issue de la troisième opération ou à l'issue de la septième opération ;
- le film séparateur est déroulé de manière continue ;
- au cours de la première opération, la table d'empilage effectue un mouvement de translation rectiligne vertical selon la première direction depuis une première position haute située à une première hauteur jusqu'une première position basse et au cours de la troisième opération, la table d'empilage effectue un mouvement de translation rectiligne vertical selon la deuxième direction depuis la première position basse jusqu'une deuxième position haute située à une deuxième hauteur inférieure à la première hauteur, lesdites hauteurs étant mesurées depuis un point de référence fixe selon une direction verticale ;
- au cours de la cinquième opération, la table d'empilage effectue un mouvement de translation rectiligne vertical selon la première direction depuis la deuxième position haute jusqu'une deuxième position basse et au cours de la septième opération, la table d'empilage effectue un mouvement de translation rectiligne vertical selon la deuxième direction depuis la deuxième position basse jusqu'une troisième position haute située à une troisième hauteur inférieure à la deuxième hauteur, lesdites hauteurs étant mesurées depuis le point de référence fixe selon une direction verticale ;
- les quatrième, cinquième, sixième et septième opérations forment une séquence, ledit procédé comprenant au moins deux séquences de sorte à former un empilage d'électrodes dans lequel les électrodes de polarité opposées sont séparées par un film séparateur ;
- les séquences différent l'une de l'autre de sorte que la troisième hauteur d'une séquence donnée est supérieure à la première hauteur d'une autre séquence qui suit immédiatement la séquence donnée ;
- la course de la table d'empilage au cours de la première opération est sensiblement égale à la course de la table d'empilage au cours de la cinquième opération ;
- la course de la table d'empilage au cours de la troisième opération est sensiblement égale à la course de la table d'empilage au cours de la septième opération ;
- les premières électrodes sont prépositionnées sur une face inférieure du film séparateur, ladite face inférieure étant située du côté de la table d'empilage.

Il est proposé en deuxième lieu une unité de fabrication comprenant :
- une table d'empilage mobile en translation selon une trajectoire rectiligne,
- des moyens de déplacement de la table d'empilage,
- des moyens de déroulage d'un film séparateur sur la table d'empilage,
- des moyens de dépose d'une deuxième électrode sur le film séparateur,
- une unité de commande comprenant un programme informatique apte à mettre en œuvre un procédé tel que précédemment décrit.

Diverses caractéristiques supplémentaires peuvent être prévues seules ou en combinaison :
- les moyens de déroulage du film séparateur sont en outre aptes à maintenir en contact une première électrode, de polarité opposée à la deuxième électrode, contre le film séparateur de sorte à convoyer ladite première électrode sur la table d'empilage ou sur une deuxième électrode.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] la [Fig.1] est vue de côté d'une représentation schématique, d'une unité de fabrication de cellules selon l'invention.
[Fig.2] la [Fig.2] est un graphique représentant les opérations d'un procédé selon l'invention, l'axe des abscisses étant le temps et l'axe des ordonnés étant une hauteur.
[Fig.3] la [Fig.3] est une vue de face de l'unité de fabrication de la [Fig.1].

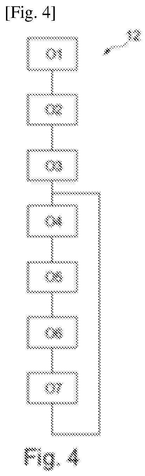

[Fig.4] la [Fig.4] est une représentation d'un procédé selon l'invention.

### Description détaillée de l'invention

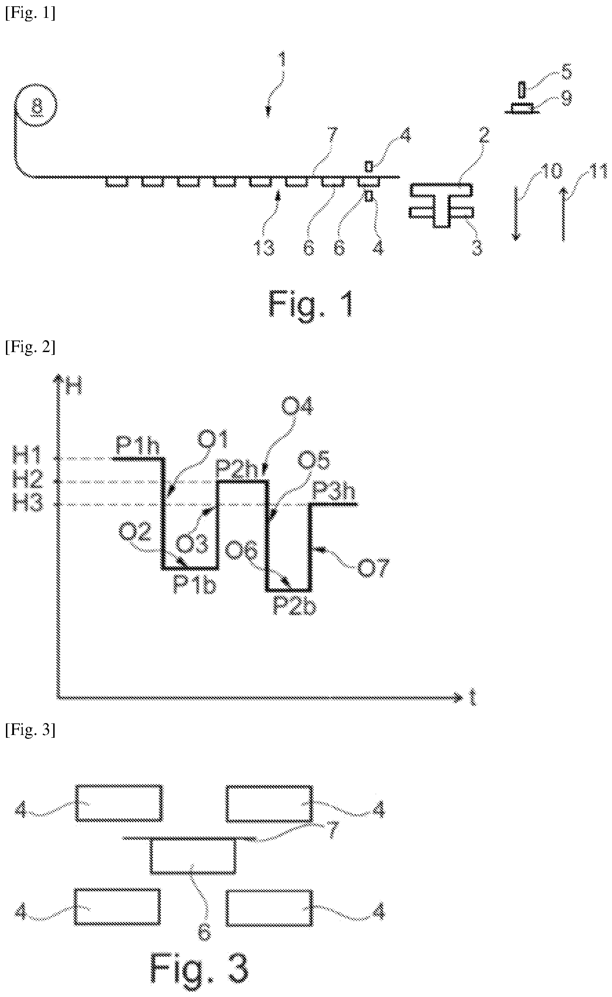

Sur la [Fig.1] est représentée une unité 1 de fabrication de cellules électriques destinées à être intégrées dans des batteries électriques.

L'unité 1 de fabrication comprend une table 2 d'empilage. La table 2 d'empilage est mobile en translation selon une trajectoire sensiblement rectiligne.

L'unité 1 de fabrication comprend avantageusement, des moyens 3 de déplacement de la table 2 d'empilage.

Avantageusement, l'unité 1 de fabrication comprend des moyens 4 de déroulage aptes à dérouler le film 7 séparateur en le disposant sur la table 2 d'empilage.

Avantageusement, l'unité 1 de fabrication comprend des moyens 5 de dépose d'une deuxième électrode 9 sur le film 7 séparateur.

Avantageusement, l'unité 1 de fabrication comprend une unité 1 de commande comprenant un programme informatique pour contrôler :
- la table 2 d'empilage,
- les moyens 3 de déplacement de la table 2 d'empilage,
- les moyens 4 de déroulage,
- les moyens 5 de dépose.

Un convoyeur (non représenté sur les dessins) achemine des premières électrodes 6 de façon à mettre ces dernières en contact avec le film 7 séparateur. Les première électrodes 6 sont positionnées sur le film 7 séparateur avant d'être déposées sur la table 2 d'empilage. En d'autres termes, les premières électrodes de forme rectangulaires sont positionnées sur le film séparateur, à distance les unes des autres, et ceci avant d'être déposées sur la table d'empilage.

Avantageusement, les moyens 4 de déroulage comportent deux pinces agencées de part et d'autre du film 7 séparateur. Le film 7 séparateur provient d'une bobine 8.

Avantageusement, les pinces sont aptes à saisir simultanément le film 7 séparateur et une première électrode 6 de façon à maintenir cette dernière contre le film 7 séparateur. Les pinces peuvent ainsi simultanément dérouler le film 7 séparateur et convoyer une première électrode 6 de façon à déposer cette dernière sur la table 2 d'empilage ou sur une deuxième électrode 9.

Dans ce qui suit un procédé 12 de fabrication d'une cellule pour batterie secondaire va être décrit.

Le procédé 12 de fabrication comprend une première opération O1 de déplacement de la table 2 d'empilage de l'unité de fabrication. Ce déplacement est effectué selon une première direction 10. En pratique, la table 2 d'empilage effectue un mouvement vertical vers le bas, c'est-à-dire en direction du sol, sur lequel ladite table 2 d'empilage est posée. La table d'empilage comprend une face 14 de dépose qui s'étend dans un plan sensiblement perpendiculaire à la première direction.

Le procédé 12 comprend une deuxième opération O2 de déroulement du film 7 séparateur sur la face 14 de dépose de la table 2 d'empilage. Le film 7 séparateur comprend une première électrode 6 préalablement positionnée sur celui-ci. La première électrode 6 est préalablement positionnée sur le film 7 séparateur au moyen du convoyeur. Au cours de la deuxième opérations O2, les pinces saisissent chacune le film 7 séparateur et la première électrode 6 et réalisent un mouvement en direction de la table 2 d'empilage pour déposer la première électrode 6 sur la table 2 d'empilage.

Avantageusement, le procédé 12 comprend une troisième opération O3 de déplacement de la table 2 d'empilage. Ce déplacement est effectué selon une deuxième direction 11 de déplacement opposée à la première direction 10 de déplacement. En pratique, la table 2 d'empilage effectue un mouvement vertical vers le haut, c'est-à-dire en s'éloignant du sol.

Avantageusement, le procédé 12 comprend une quatrième opération O4 de dépose d'une deuxième électrode 9 sur le film 7 séparateur. La deuxième électrode 9 est de polarité opposée à la première électrode 6. Au cours de cette quatrième opération O4, les moyens 5 de dépose saisissent une deuxième électrode 9 depuis une zone dédiée puis la déposent sur le film 7 séparateur, sensiblement en regard de la première électrode 6.

Avantageusement, le procédé 12 comprend une cinquième opération O5 de déplacement de la table 2 d'empilage selon la première direction 10. La table 2 d'empilage effectue alors un mouvement vers le haut en s'éloignant du sol.

Avantageusement, le procédé 12 comprend une sixième opération O6 de déroulement du film 7 séparateur. La sixième opération O6 de déroulement est sensiblement identique à la deuxième opération O2 de déroulement. Ainsi, au cours de la sixième opération O6 de déroulement, les pinces saisissent chacune le film 7 séparateur et la première électrode 6 (préassemblée sur le film séparateur) et réalisent un mouvement en direction de la table 2 d'empilage pour déposer la première électrode 6 sur une deuxième électrode 9 déposée au cours de la quatrième opération O4. Au cours de la sixième opération O6, la deuxième électrode 9 est recouverte par du film 7 séparateur grâce à un mouvement de translation des pinces en direction de la table 2 d'empilage et une première électrode 6 est déposée sur le film 7 séparateur et sensiblement en regard de la deuxième électrode 9. A noter que les électrodes ne sont bien entendu pas en contact direct, le film 7 séparateur étant agencé entre elles.

Avantageusement, le procédé 12 comprend une septième opération O7 de déplacement de la table 2 d'empilage selon la deuxième direction 11.

Avantageusement, la quatrième opération O4, la cinquième opération O5, la sixième opération O6 et la septième opération O7 sont répétées afin de former un empilage d'électrodes. Dans cet empilage, les électrodes sont séparées par le film 7 séparateur.

Ainsi que précédemment évoqué, lorsque le film 7 séparateur est déroulé, c'est-à-dire au cours de la deuxième opération O2 et de la sixième opération O6, la première électrode 6 qui est saisies par les pinces est enveloppée par le film 7 séparateur au cours du mouvement desdites pinces en direction de la table d'empilage. Ceci est rendu possible en prépositionnant la première électrode 6 sur le film 7 séparateur et en particulier sur une face 13 inférieure dudit séparateur. La face 13 inférieure du film 7 séparateur se définit comme celle étant située du côté de la table 2 d'empilage, en référence à la [Fig.1].

Ce procédé 12 permet d'atteindre des cadences industrielles en réduisant le nombre d'opérations. Les mouvements des différents outils sont ainsi optimisés.

Avantageusement, la table 2 d'empilage se déplace uniquement selon une trajectoire sensiblement rectiligne, pendant l'empilage des électrodes.

Ceci permet de sécuriser l'empilement d'électrodes. En effet, d'autres mouvements seraient susceptibles de provoquer un désalignement des électrodes, ce qui pourrait être à l'origine de courts circuits. De plus, des mouvements plus complexes, c'est-à-dire non rectiligne, allongeraient les temps de fabrication.

Les électrodes sont disposées les unes sur les autres tout en étant séparées les unes des autres par du film 7 séparateur.

Avantageusement, la deuxième opération O2 est initiée à l'issue de la première opération O1, et la sixième opération O6 est initiée à l'issue de la cinquième opération O5. En d'autres termes, la deuxième opération O2 est réalisée après la première opération O1, et la sixième opération O6 est réalisée après la cinquième opération O5.

Le mouvement des pinces est ainsi optimisé. En effet, elles peuvent se déplacer selon le parcours le plus court ou l'un des plus courts possible en direction de la table 2 d'empilage. C'est-à-dire sensiblement en ligne droite en direction de la table 2 d'empilage, car cette dernière est déplacée vers le bas pour permettre le passage des pinces. Lorsque la table 2 d'empilage est déplacée vers le bas, les pinces peuvent se déplacer au-dessus de la table 2 d'empilage pour dérouler le film 7 séparateur et déposer la première électrode 6.

Avantageusement, la quatrième opération O4 est initiée à l'issue de la troisième opération O3 ou à l'issue de la septième opération O7.

Le mouvement des moyens 5 de dépose est ainsi optimisé. En effet, ils peuvent se déplacer selon le parcours le plus court ou l'un des plus court possible en direction de la table d'empilage.

Avantageusement, le film 7 séparateur est déroulé de manière continue. En d'autres termes, le film 7 séparateur n'est pas découpé au cours des opérations d'empilage. Le film 7 séparateur provient d'une bobine 8 et celle-ci est déroulée grâce aux pinces sans le découper excepté en toute fin de processus d'empilage lorsque l'empilage est prêt à être évacué de la table 2 d'empilage.

Ceci permet de réduire le nombre d'opérations et ainsi améliorer les cadences de production.

Dans ce qui suit, les hauteurs sont mesurées depuis un point de référence fixe, selon une direction verticale (par exemple la première direction 10 et la deuxième direction 11).

Avantageusement et en référence à la [Fig.2], au cours de la première opération O1, la table 2 d'empilage effectue un mouvement de translation rectiligne vertical selon la première direction 10. Ce mouvement de translation est initié depuis une première position haute P1h située à une première hauteur H1 jusqu'une première position basse P1b. Au cours de la troisième opération O3, la table 2 d'empilage effectue un mouvement de translation rectiligne vertical selon la deuxième direction 11. Ce mouvement de translation est initié depuis la première position basse P1b jusqu'une deuxième position haute P2h située à une deuxième hauteur H2. Avantageusement, la deuxième hauteur H2 est inférieure à la première hauteur H1.

Cette différence entre la première hauteur H1 et la deuxième hauteur H2 permet avantageusement d'accommoder l'augmentation de l'épaisseur de l'empilage d'électrodes. En d'autres termes, la table 2 d'empilage ne remonte pas à sa position initiale (première position haute P1h) pour permettre le passage des pinces. En effet, en cas de remontée en position initiale (première position haute p1h), les pinces seraient susceptibles de percuter l'empilage d'électrodes et afin d'éviter cela il serait alors nécessaire de modifier le mouvement des pinces ce qui ralentirait la cadence de production.

Avantageusement et en référence à la [Fig.2], au cours de la cinquième opération O5, la table 2 d'empilage effectue un mouvement de translation rectiligne vertical selon la première direction. Ce mouvement de translation est initié depuis la deuxième position haute P2h située à la deuxième hauteur H2 jusqu'une deuxième position basse P2b. Au cours de la septième opération O7, la table 2 d'empilage effectue un mouvement de translation rectiligne vertical selon la deuxième direction 11. Ce mouvement de translation est initié depuis la deuxième position basse P2b jusqu'une troisième position haute P3h située à une troisième hauteur H3. Avantageusement, la troisième hauteur H3 est inférieure à la deuxième hauteur H2.

Cette différence entre la deuxième hauteur H2 et la troisième hauteur H3 permet avantageusement d'accommoder l'augmentation de l'épaisseur de l'empilage d'électrodes, ainsi que ceci a été précédemment expliqué.

Avantageusement :
- la quatrième opération O4,
- la cinquième opération O5,
- la sixième opération O6,
- la septième opération O7,
forment une séquence.

Le procédé comprend avantageusement au moins deux séquences pour former un empilage d'électrodes séparées par du film 7 séparateur.

Toutefois les séquences sont différentes les unes des autres.

Avantageusement, la troisième hauteur H3 d'une séquence donnée est supérieure à la première hauteur H1 d'une autre séquence qui suit immédiatement la séquence donnée.

Ceci permet avantageusement d'accommoder l'augmentation de l'épaisseur de l'empilage d'électrodes.

Avantageusement, la course de la table 2 d'empilage au cours de la première opération O1 est sensiblement égale à la course de la table 2 d'empilage au cours de la cinquième opération O5.

Ceci permet d'obtenir un profil de mouvement en escalier en référence à la [Fig.2]. De cette façon il devient possible de réduire les mouvements inutiles en réduisant la course de la table 2 d'empilage à son stricte nécessaire. Ainsi, la cadence de production est augmentée.

Avantageusement, la course de la table 2 d'empilage au cours de la troisième opération O3 est sensiblement égale à la course de la table 2 d'empilage au cours de la septième opération O7.

Ceci permet d'obtenir un profil de mouvement en escalier en référence à la [Fig.2]. De cette façon il devient possible de réduire les mouvements inutiles en réduisant la course de la table d'empilage à son stricte nécessaire. Ainsi, la cadence de production est augmentée.

## Revendications

1. Procédé (12) de fabrication d'une cellule pour batterie secondaire comprenant :
- une première opération (O1) de déplacement d'une table (2) d'empilage, ledit déplacement étant effectué selon une première direction (10) de déplacement,
- une deuxième opération (O2) de déroulement d'un film (7) séparateur sur la table (2) d'empilage, ledit film (7) séparateur comprenant une première électrode (6) préalablement positionnée sur celui-ci,
- une troisième opération (O3) de déplacement de la table (2) d'empilage selon une deuxième direction (11) de déplacement opposée à la première direction (10) de déplacement,
**caractérisé en ce que** le procédé comprend :
- une quatrième opération (O4) de dépose d'une deuxième électrode (9) sur le film (7) séparateur, ladite deuxième électrode (9) étant de polarité opposée à la première électrode (6),
- une cinquième opération (O5) de déplacement de la table (2) d'empilage, selon la première direction (10) de déplacement,
- une sixième opération (O6) de déroulement du film (7) séparateur de sorte à recouvrir la deuxième électrode (9), ledit film (7) séparateur comprenant en outre une première électrode (6) préassemblée sur celui-ci et déposée sur le film (7) séparateur au-dessus de la deuxième électrode (9),
- une septième opération (O7) de déplacement de la table (2) d'empilage selon la deuxième direction (11),
procédé dans lequel, les quatrième, cinquième, sixième, septième opérations (O4 - O7) sont répétées jusqu'à former un empilage d'électrodes dans lequel les électrodes de polarité opposées sont séparées par le film (7) séparateur.

2. Procédé (12) selon la revendication 1 dans lequel, la première direction (10) de déplacement est orientée verticalement vers le bas, et la deuxième direction (11) de déplacement est orientée verticalement vers le haut, procédé (12) dans lequel la table (2) d'empilage se déplace uniquement selon une trajectoire sensiblement rectiligne pendant l'empilage des électrodes.

3. Procédé (12) selon l'une quelconque des revendications précédentes dans lequel, les électrodes sont disposées les unes sur les autres pour former un empilage d'électrodes, les électrodes étant séparées les unes des autres par du film (7) séparateur.

4. Procédé (12) selon l'une quelconque des revendications précédentes dans lequel, la deuxième opération (O2) et la sixième opération (O6) sont respectivement initiées à l'issue de la première opération (O1) et de la cinquième opération (O5).

5. Procédé (12) selon l'une quelconque des revendications précédentes dans lequel, la quatrième opération (O4) est initiée à l'issue de la troisième opération (O3) ou à l'issue de la septième opération (O7).

6. Procédé (12) selon l'une quelconque des revendications précédentes dans lequel, le film (7) séparateur est déroulé de manière continue.

7. Procédé (12) selon l'une quelconque des revendications précédentes dans lequel, au cours de la première opération (O1), la table (2) d'empilage effectue un mouvement de translation rectiligne vertical selon la première direction (10) depuis une première position haute (P1h) située à une première hauteur (H1) jusqu'une première position (P1b) basse et au cours de la troisième opération (O3), la table (2) d'empilage effectue un mouvement de translation rectiligne vertical selon la deuxième direction(11) depuis la première position (P1b) basse jusqu'une deuxième position (P2h) haute située à une deuxième hauteur (H2) inférieure à la première hauteur (H1), lesdites hauteurs étant mesurées depuis un point de référence fixe selon une direction verticale.

8. Procédé (12) selon la revendication 7 dans lequel, au cours de la cinquième opération (O5), la table (2) d'empilage effectue un mouvement de translation rectiligne vertical selon la première direction (10) depuis la deuxième position (P2h) haute jusqu'une une deuxième position (P2b) basse et au cours de la septième opération (O7), la table (2) d'empilage effectue un mouvement de translation rectiligne vertical selon la deuxième direction (11) depuis la deuxième position (P2b) basse jusqu'une troisième position (P3h) haute située à une troisième hauteur (H3) inférieure à la deuxième hauteur (H2), lesdites hauteurs étant mesurées depuis le point de référence fixe selon une direction verticale.

9. Procédé (12) selon l'une quelconque des revendications précédentes dans lequel, les quatrième, cinquième, sixième et septième opérations (O4 - O7) forment une séquence, ledit procédé (12) comprenant au moins deux séquences de sorte à former un empilage d'électrodes dans lequel les électrodes de polarité opposées sont séparées par un film (7) séparateur.

10. Procédé (12) selon la revendication 9 en combinaison avec la revendication 8 dans lequel, les séquences différent l'une de l'autre de sorte que la troisième hauteur (H3) d'une séquence donnée est supérieure à la première hauteur (H1) d'une autre séquence qui suit immédiatement la séquence donnée.

11. Procédé (12) selon l'une quelconque des revendications précédentes dans lequel la course de la table (2) d'empilage au cours de la première opération (O1) est sensiblement égale à la course de la table (2) d'empilage au cours de la cinquième opération (O5).

12. Procédé (12) selon l'une quelconque des revendications précédentes dans lequel la course de la table (2) d'empilage au cours de la troisième opération (O3) est sensiblement égale à la course de la table (2) d'empilage au cours de la septième opération (O7).

13. Procédé (12) selon l'une quelconque des revendications précédentes dans lequel, les premières électrodes (6) sont prépositionnées sur une face (13) inférieure du film séparateur, ladite face (13) inférieure étant située du côté de la table (2) d'empilage.

14. Unité (1) de fabrication comprenant :
- une table (2) d'empilage mobile en translation selon une trajectoire rectiligne,
- des moyens (3) de déplacement de la table (2) d'empilage,
- des moyens (4) de déroulage d'un film (7) séparateur sur la table (2) d'empilage,
- des moyens (5) de dépose d'une deuxième électrode (9) sur le film (7) séparateur,
- une unité de commande comprenant un programme informatique apte à mettre en œuvre un procédé selon l'une quelconque des revendications 1 à 13.

15. Unité (1) selon la revendication précédente dans laquelle, les moyens de (4) déroulage du film (7) séparateur sont en outre aptes à maintenir en contact une première électrode (6), de polarité opposée à la deuxième électrode (9), contre le film (7) séparateur de sorte à convoyer ladite première électrode (6) sur la table (2) d'empilage ou sur une deuxième électrode (9).

## Patentansprüche

1. Verfahren (12) zum Herstellen einer Zelle für eine Speicherbatterie, umfassend:
- einen ersten Vorgang (O1) zum Verschieben eines Stapeltisches (2), wobei die Verschiebung in einer ersten Verschiebungsrichtung (10) ausgeführt wird,
- einen zweiten Vorgang (O2) zum Abrollen einer Trennfolie (7) auf den Stapeltisch (2), die Trennfolie (7) umfassend eine darauf vorab positionierte erste Elektrode (6),
- einen dritten Vorgang (O3) zum Verschieben des Stapeltisches (2) in einer zweiten Verschiebungsrichtung (11), die der ersten Verschiebungsrichtung (10) entgegengesetzt ist,
**dadurch gekennzeichnet, dass** das Verfahren umfasst:
- einen vierten Vorgang (O4) zum Aufbringen einer zweiten Elektrode (9) auf die Trennfolie (7), wobei die zweite Elektrode (9) eine der ersten Elektrode (6) entgegengesetzte Polarität aufweist,
- einen fünften Vorgang (O5) zum Verschieben des Stapeltisches (2) in der ersten Verschiebungsrichtung (10),
- einen sechsten Vorgang (O6) zum Abrollen der Trennfolie (7), um die zweite Elektrode (9) zu bedecken, wobei die Trennfolie (7) ferner eine erste Elektrode (6) umfasst, die auf dieser vormontiert und auf der Trennfolie (7) oberhalb der zweiten Elektrode (9) aufgebracht ist,
- einen siebten Vorgang (O7) zum Verschieben des Stapeltisches (2) in der zweiten Richtung (11),
wobei bei dem Verfahren der vierte, der fünfte, der sechste, der siebte Vorgang (O4 - O7) wiederholt wird, bis ein Elektrodenstapel ausgebildet ist, in dem die Elektroden mit entgegengesetzter Polarität durch die Trennfolie (7) getrennt sind.

2. Verfahren (12) nach Anspruch 1, wobei die erste Verschiebungsrichtung (10) vertikal nach unten orientiert ist und die zweite Verschiebungsrichtung (11) vertikal nach oben orientiert ist, wobei sich bei dem Verfahren (12) der Stapeltisch (2) während des Stapelns der Elektroden ausschließlich entlang einer im Wesentlichen geradlinigen Bahn verschiebt.

3. Verfahren (12) nach einem der vorstehenden Ansprüche, wobei zum Ausbilden eines Elektrodenstapels die Elektroden übereinander angeordnet sind, wobei die Elektroden durch Trennfolie (7) voneinander getrennt sind.

4. Verfahren (12) nach einem der vorstehenden Ansprüche, wobei der zweite Vorgang (O2) und der sechste Vorgang (O6) jeweils am Ende des ersten Vorgangs (O1) und des fünften Vorgangs (O5) eingeleitet werden.

5. Verfahren (12) nach einem der vorstehenden Ansprüche, wobei der vierte Vorgang (O4) am Ende des dritten Vorgangs (O3) oder am Ende des siebten Vorgangs (O7) eingeleitet wird.

6. Verfahren (12) nach einem der vorstehenden Ansprüche, wobei die Trennfolie (7) kontinuierlich abgerollt wird.

7. Verfahren (12) nach einem der vorstehenden Ansprüche, wobei während des ersten Vorgangs (O1) der Stapeltisch (2) eine geradlinige vertikale Translationsbewegung in der ersten Richtung (10) von einer ersten oberen Position (P1h), die sich in einer ersten Höhe (H1) befindet, bis zu einer ersten unteren Position (P1b) ausführt und während des dritten Vorgangs (O3) der Stapeltisch (2) eine geradlinige vertikale Translationsbewegung in der zweiten Richtung (11) von der ersten unteren Position (P1b) bis zu einer zweiten oberen Position (P2h) ausführt, die sich in einer zweiten Höhe (H2) befindet, die niedriger als die erste Höhe (H1) ist, wobei die Höhen von einem festen Bezugspunkt aus in einer vertikalen Richtung gemessen werden.

8. Verfahren (12) nach Anspruch 7, wobei während des fünften Vorgangs (O5) der Stapeltisch (2) eine geradlinige vertikale Translationsbewegung in der ersten Richtung (10) von der zweiten hohen Position (P2h) bis zu einer zweiten niedrigen Position (P2b) ausführt und während des siebten Vorgangs (O7) der Stapeltisch (2) eine geradlinige vertikale Translationsbewegung in der zweiten Richtung (11) von der zweiten niedrigen Position (P2b) bis zu einer dritten hohen Position (P3h) ausführt, die sich in einer dritten Höhe (H3) befindet, die niedriger als die zweite Höhe (H2) ist, wobei die Höhen von dem festen Bezugspunkt aus in einer vertikalen Richtung gemessen werden.

9. Verfahren (12) nach einem der vorstehenden Ansprüche, wobei der vierte, der fünfte, der sechste und der siebte Vorgang (O4 - O7) eine Sequenz ausbilden, das Verfahren (12) umfassend mindestens zwei Sequenzen, um einen Elektrodenstapel auszubilden, in dem die Elektroden mit entgegengesetzter Polarität durch eine Trennfolie (7) getrennt sind.

10. Verfahren (12) nach Anspruch 9 in Kombination mit Anspruch 8, wobei sich die Sequenzen so voneinander unterscheiden, dass die dritte Höhe (H3) einer gegebenen Sequenz größer als die erste Höhe (H1) einer anderen Sequenz ist, die unmittelbar auf die gegebene Sequenz folgt.

11. Verfahren (12) nach einem der vorstehenden Ansprüche, wobei der Hub des Stapeltisches (2) während des ersten Vorgangs (01) im Wesentlichen gleich dem Hub des Stapeltisches (2) während des fünften Vorgangs (O5) ist.

12. Verfahren (12) nach einem der vorstehenden Ansprüche, wobei der Hub des Stapeltisches (2) während des dritten Vorgangs (O3) im Wesentlichen gleich dem Hub des Stapeltisches (2) während des siebten Vorgangs (O7) ist.

13. Verfahren (12) nach einem der vorstehenden Ansprüche, wobei die ersten Elektroden (6) auf einer unteren Fläche (13) der Trennfolie vorpositioniert sind, wobei sich die untere Fläche (13) auf der Seite des Stapeltisches (2) befindet.

14. Herstellungseinheit (1), umfassend:
- einen Stapeltisch (2), der entlang einer geradlinigen Bahn translatorisch bewegbar ist,
- Mittel (3) zum Verschieben des Stapeltisches (2),
- Mittel (4) zum Abrollen einer Trennfolie (7) auf den Stapeltisch (2),
- Mittel (5) zum Aufbringen einer zweiten Elektrode (9) auf die Trennfolie (7),
- eine Steuereinheit, umfassend ein Computerprogramm, das geeignet ist, um ein Verfahren nach einem der Ansprüche 1 bis 13 zu implementieren.

15. Einheit (1) nach dem vorstehenden Anspruch, wobei die Mittel zum Abrollen (4) der Trennfolie (7) ferner geeignet sind, um eine erste Elektrode (6) mit entgegengesetzter Polarität zu der zweiten Elektrode (9) in Kontakt mit der Trennfolie (7) zu halten, um die erste Elektrode (6) auf den Stapeltisch (2) oder auf eine zweite Elektrode (9) zu befördern.

## Claims

1. Method (12) for manufacturing a cell for a secondary battery, the method comprising:
- a first operation (01) of moving a stacking table (2), said movement being carried out in a first movement direction (10),
- a second operation (O2) of unwinding a separator film (7) on the stacking table (2), said separator film (7) comprising a first electrode (6) previously positioned thereon,
- a third operation (O3) of moving the stacking table (2) in a second movement direction (11) opposite to the first movement direction (10),
**characterized in that** the method comprises:
- a fourth operation (O4) of putting a second electrode (9) on the separator film (7), said second electrode (9) being of opposite polarity to the first electrode (6),
- a fifth operation (O5) of moving the stacking table (2) in the first movement direction (10),
- a sixth operation (O6) of unwinding the separator film (7) so as to cover the second electrode (9), said separator film (7) further comprising a first electrode (6) preassembled thereon and put on the separator film (7) above the second electrode (9),
- a seventh operation (O7) of moving the stacking table (2) in the second direction (11),
in which method the fourth, fifth, sixth and seventh operations (O4 - O7) are repeated until an electrode stack is formed in which the electrodes of opposite polarity are separated by the separator film (7).

2. Method (12) according to claim 1, wherein the first movement direction (10) is oriented vertically downward, and the second movement direction (11) is oriented vertically upward, in which method (12) the stacking table (2) moves only along a substantially rectilinear path during the electrode stacking.

3. Method (12) according to either of the preceding claims, wherein the electrodes are arranged on top of one another to form an electrode stack, the electrodes being separated from one another by the separator film (7).

4. Method (12) according to any of the preceding claims, wherein the second operation (O2) and the sixth operation (O6) are respectively initiated at the end of the first operation (01) and the fifth operation (O5).

5. Method (12) according to any of the preceding claims, wherein the fourth operation (O4) is initiated at the end of the third operation (O3) or at the end of the seventh operation (O7).

6. Method (12) according to any of the preceding claims, wherein the separator film (7) is unwound continuously.

7. Method (12) according to any of the preceding claims, wherein, during the first operation (01), the stacking table (2) performs a vertical rectilinear translation in the first direction (10) from a first high position (P1h) located at a first height (H1) to a first low position (P1b) and, during the third operation (O3), the stacking table (2) performs a vertical rectilinear translation in the second direction (11) from the first low position (P1b) to a second high position (P2h) located at a second height (H1) which is lower than the first height (H1), said heights being measured from a fixed reference point in a vertical direction.

8. Method (12) according to claim 7, wherein, during the fifth operation (O5), the stacking table (2) performs a vertical rectilinear translation in the first direction (10) from the second high position (P2h) to a second low position (P2b) and, during the seventh operation (O7), the stacking table (2) performs a vertical rectilinear translation in the second direction (11) from the second low position (P2b) to a third high position (P3h) located at a third height (H3) which is lower than the second height (H2), said heights being measured from the fixed reference point in a vertical direction.

9. Method (12) according to any of the preceding claims, wherein the fourth, fifth, sixth and seventh operations (O4 - O7) form a sequence, said method (12) comprising at least two sequences so as to form an electrode stack in which the electrodes of opposite polarity are separated by a separator film (7).

10. Method (12) according to claim 9 in conjunction with claim 8, wherein the sequences differ from one another such that the third height (H3) of a given sequence is greater than the first height (H1) of another sequence immediately following the given sequence.

11. Method (12) according to any of the preceding claims, wherein the travel of the stacking table (2) during the first operation (01) is substantially equal to the travel of the stacking table (2) during the fifth operation (O5).

12. Method (12) according to any of the preceding claims, wherein the travel of the stacking table (2) during the third operation (O3) is substantially equal to the travel of the stacking table (2) during the seventh operation (O7).

13. Method (12) according to any of the preceding claims, wherein the first electrodes (6) are prepositioned on a lower face (13) of the separator film, said lower face (13) being located on the stacking table (2) side.

14. Manufacturing unit (1) comprising:
- a stacking table (2) translatably movable along a straight path,
- means (3) for moving the stacking table (2),
- means (4) for unwinding a separator film (7) on the stacking table (2),
- means (5) for putting a second electrode (9) on the separator film (7),
- a control unit comprising a computer program capable of executing a method according to any of claims 1 to 13.

15. Unit (1) according to the preceding claim, wherein the means (4) for unwinding the separator film (7) are further capable of keeping a first electrode (6), of opposite polarity to the second electrode (9), in contact with the separator film (7) so as to convey said first electrode (6) onto the stacking table (2) or onto a second electrode (9).
